# EUROPÄISCHE PATENTANMELDUNG

(11) **EP 3 906 772 A1**
(43) Veröffentlichungstag der Anmeldung: **10.11.2021**
(21) Anmeldenummer: 21156592.4
(22) Anmeldetag: 11.02.2021
(51) Int. Cl.: A01D 69/02

(54) **LANDWIRTSCHAFTLICHE ARBEITSMASCHINE**

(30) Priorität: 07.05.2020 DE 102020112444
(71) Anmelder: CLAAS Selbstfahrende Erntemaschinen GmbH, 33428 Harsewinkel (DE)
(72) Erfinder: Sprigade, Daniel, 59427 Unna (DE); Witte, Johann, 58730 Fröndenberg (DE); Wohlfahrt, Fabian, 33428 Harsewinkel (DE); Heymann, Philipp, 59519 Möhnesee Wamel (DE)
(74) Vertreter: CLAAS Gruppe

(57) **Zusammenfassung**

Die Erfindung betrifft eine landwirtschaftliche Arbeitsmaschine (1), insbesondere einen Mähdrescher, Feldhäcksler oder Traktor, wobei die landwirtschaftliche Arbeitsmaschine (1) eine Antriebsanordnung (10) mit einer Verbrennungskraftmaschine (11) und mit einem eine elektrische Hilfsmaschine (12) aufweisenden elektrischen Energiebereitstellungssystem (14) aufweist und wobei die landwirtschaftliche Arbeitsmaschine (1) mindestens einen Leistungsverbraucher aufweist (6, 8), der von der Antriebsanordnung (10) antreibbar ist. Es wird vorgeschlagen, dass das elektrische Energiebereitstellungssystem (14) als Modulbaukasten (21) ausgebildet ist.

## Beschreibung

Die vorliegende Erfindung betrifft eine landwirtschaftliche Arbeitsmaschine gemäß dem Oberbegriff von Anspruch 1.

Der bekannte Stand der Technik (EP 3 257 353 A1), von dem die Erfindung ausgeht, betrifft eine landwirtschaftliche Arbeitsmaschine gemäß dem Oberbegriff von Anspruch 1.

Unter einer landwirtschaftlichen Arbeitsmaschine wird jegliche Form von Arbeitsfahrzeug verstanden, das mit einem eigenen Fahrantrieb (Antriebsachse insbesondere mit Antriebsrädern oder Raupenfahrwerk) versehen ist. Nur beispielhaft erwähnt seien als landwirtschaftliche Arbeitsmaschinen Mähdrescher, Feldhäcksler oder Traktoren, gegebenenfalls mit Anbauten wie Düngerstreuer, Sämaschinen, Spritzeinrichtungen, Wender, Schwader oder dergleichen.

Auf dem technischen Gebiet der Landwirtschaft ist es bekannt, verschiedene Abläufe einer landwirtschaftlichen Arbeitsmaschine automatisiert oder teilautomatisiert ablaufen zu lassen, darunter unter anderem den Betrieb und die Steuerung eines Großteils der Arbeitsaggregate der Arbeitsmaschine. Unter einem Arbeitsaggregat wird insbesondere eine landwirtschaftliche Arbeit unterstützende oder verrichtende und dadurch Leistung verbrauchende Systemkomponente der Arbeitsmaschine verstanden. Neben den vorgenannten Anbauten sind dies beispielsweise Haspel, Schneidwerk, Dreschwerk, Fördereinrichtungen (Förderschnecke oder -band), Hubwerke (Front- oder Heckhubwerk) oder dergleichen. All dies sind Leistungsverbraucher.

Während der Fahrt eines Mähdreschers durch den Feldbestand wird beispielsweise dessen Haspel und Schneidwerk betrieben. Außerdem wird das Schnittgut über Förderschnecken und -bänder durch einen Einzugskanal transportiert, wobei das Schnittgut auch ein Dreschwerk durchläuft. Die einzelnen Leistungsverbraucher werden im Bedarfsfall automatisch zugeschaltet oder getrennt. Beispielsweise ist denkbar, dass, wenn ein Mähdrescher in einen Feldbestand hineinfährt, ein Fronthubwerk mit daran angeordneter Haspel und Schneidwerk abgesenkt wird und Haspel, Schneidwerk, Förderschnecken und -bänder sowie Dreschwerk eingeschaltet werden. Beim Ausfahren aus dem Feldbestand oder bei einer Wende ist es wiederum denkbar, dass Haspel, Schneidwerk, Förderschnecken und -bänder sowie Dreschwerk ausgeschaltet und das Fronthubwerk mit daran angeordneter Haspel und Schneidwerk angehoben wird.

Die in Rede stehenden landwirtschaftlichen Arbeitsmaschinen weisen üblicherweise eine Verbrennungskraftmaschine, insbesondere einen Dieselmotor, als gemeinsamen Antrieb für die Arbeitsaggregate und den Fahrantrieb auf. Als einziger Energiespeicher dient der Verbrennungskraftmaschine ein Kraftstofftank.

Es sind auch landwirtschaftliche Arbeitsmaschinen bekannt, die neben einer als Hauptmaschine betriebenen Verbrennungskraftmaschine, auch als Primärantrieb bezeichnet, noch eine separate, elektrische Hilfsmaschine (E-Maschine) aufweisen. Diese dient in der Regel ausschließlich dazu, dass der Fahrer der landwirtschaftlichen Arbeitsmaschine im Bedarfsfall die Systemleistung kurzzeitig um die Leistungsfähigkeit der Elektromaschine steigern kann (sogenannter Boost-Betrieb). Als elektrischer Energiespeicher dient der elektrischen Hilfsmaschine beispielsweise ein Akku.

Es ist auch ein Hybridsystem bekannt, bei dem eine elektrische Hilfsmaschine Lastschwankungen bedingt durch Unterschiede in der Bestandsdichte ausgleicht. Bei einem plötzlichen Lastanstieg aufgrund einer Erhöhung der Dichte des Erntegutbestands stellt die elektrische Hilfsmaschine sofort zusätzliche Leistung zur Verfügung, wodurch die Drehzahl an einer Abtriebswelle der Verbrennungskraftmaschine weitestgehend konstant gehalten wird.

Es ist dabei eine Herausforderung, Hybridsysteme für die in Rede stehenden landwirtschaftlichen Arbeitsmaschinen möglichst kostengünstig zu gestalten.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, bei landwirtschaftlichen Arbeitsmaschinen mit einem Hybridsystem die Kosten dadurch zu verringern, dass ein solches Hybridsystem zumindest in Teilen modular aufgebaut ist. Zumindest ist vorschlagsgemäß das elektrische Energiebereitstellungssystem mit der elektrischen Hilfsmaschine modular aufgebaut. Einzelne Systemkomponenten des elektrischen Energiebereitstellungssystems können auf diese Weise modellübergreifend (also für verschiedene Modelle desselben Fahrzeugtyps) und sogar fahrzeugübergreifend (also für verschiedene Fahrzeugtypen) hergestellt und verwendet werden. Dadurch sinken die einzelnen Komponentenpreise und auch der zugehörige Herstellungsaufwand verringert sich. Ein modularer Aufbau führt auch zu einer Vereinfachung der Montage der einzelnen Systemkomponenten, insbesondere wenn diese, einzeln oder in einer oder mehreren Gruppen, gekapselt vorliegen.

Im Einzelnen wird vorgeschlagen, dass das elektrische Energiebereitstellungssystem als Modulbaukasten ausgebildet ist.

Im Folgenden wird die Erfindung anhand einer lediglich Ausführungsbeispiele darstellenden Zeichnung näher erläutert. In der Zeichnung zeigt
- Fig. 1: eine schematische Seitenansicht einer vorschlagsgemäßen landwirtschaftlichen Arbeitsmaschine und
- Fig. 2: eine schematische Darstellung einer Antriebsanordnung einer landwirtschaftlichen Arbeitsmaschine mit einem elektrischen Energiebereitstellungssystem als Modulbaukasten, wobei a) ein "zentrales" Modul und b) "dezentrale" Module des Modulbaukastens zeigt.

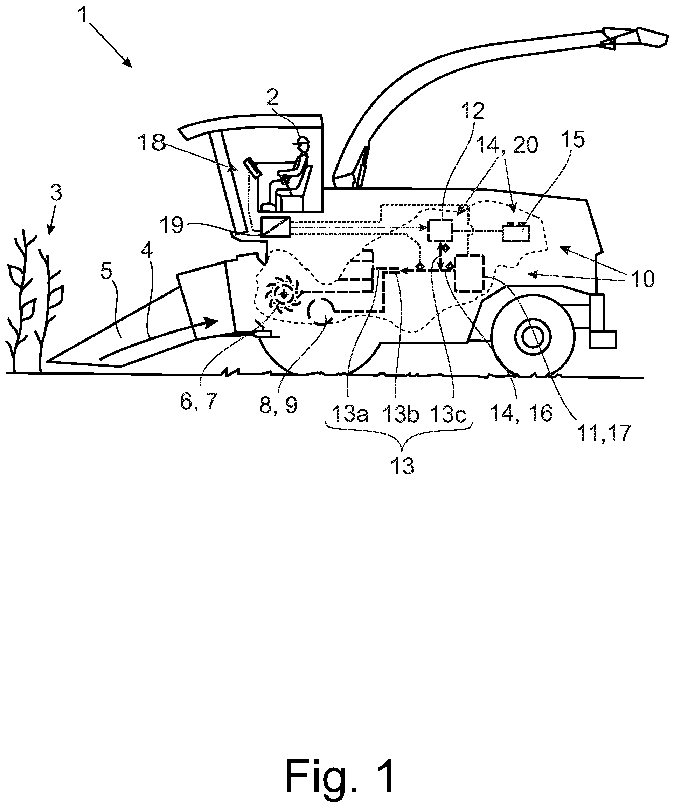

Die Zeichnung zeigt in Fig. 1 eine vorschlagsgemäße landwirtschaftliche Arbeitsmaschine 1, hier lediglich beispielhaft in Form eines Feldhäckslers. Die folgenden Ausführungen sind zwar auf einen solchen Feldhäcksler bezogen, gelten aber in entsprechender Weise auch für alle andere Arten von landwirtschaftlichen Arbeitsmaschinen 1 wie Mähdrescher oder Traktoren.

Die hier und vorzugsweise unter Anwesenheit eines Fahrers 2 in einem manuellen Arbeitsmodus manuell fahrbare und in einem Automatikmodus selbstfahrbare als Erntemaschine ausgebildete landwirtschaftliche Arbeitsmaschine 1 wird durch einen Feldbestand 3, beispielsweise ein Maisfeld, gefahren. Ein Gutfluss 4 aus Pflanzenteilen wird während des Betriebs durch einen Einzugskanal 5 eingezogen und zum Zwecke der weiteren Zerkleinerung zu einem Leistungsverbraucher 6, hier einem Arbeitsaggregat 7 in Form einer Häckslertrommel, geführt. Ein anderer Leistungsverbraucher 8 bildet einen Fahrantrieb 9 mit einer Antriebsachse für Antriebsräder.

Außerdem verfügt die landwirtschaftliche Arbeitsmaschine 1 über eine Antriebsanordnung 10, die zum einen als Hauptmaschine eine Verbrennungskraftmaschine 11, hier und vorzugsweise in Form eines Dieselmotors, und zum anderen eine elektrische Hilfsmaschine 12, hier und vorzugsweise in Form einer Elektromaschine, aufweist. Die Antriebsanordnung 10 dient sowohl zum Antrieb des Fahrantriebs 9 als auch, und zwar gleichzeitig zum Antrieb des Fahrantriebs 9, zum Antrieb verschiedener Arbeitsaggregate 7. Hauptmaschine und Elektromaschine wirken also nach Art eines Hybridsystems zusammen.

Dazu ist als Bestandteil der Antriebsanordnung 10 ein von der Verbrennungskraftmaschine 11 ausgehender Antriebsstrang 13 vorgesehen, der dem Ausleiten von Antriebsleistung der Verbrennungskraftmaschine 11 an die Leistungsverbraucher 6 und 8 dient. Der Antriebsstrang 13 weist hier und vorzugweise drei Teilantriebsstränge 13a, 13b und 13c auf, in die sich dieser aufteilt. Die elektrische Hilfsmaschine 12 ist an den Antriebsstrang 13 angekoppelt, beispielsweise über ein Getriebe (nicht dargestellt).

Der erste Teilantriebsstrang 13a ist hier und vorzugsweise zum Übertragen von Antriebsleistung der Verbrennungskraftmaschine 11 an das mindestens eine Arbeitsaggregat 7 (z.B. Häckslertrommel) konfiguriert. Der zweite Teilantriebsstrang 13b ist hier und vorzugsweise zum Übertragen von Antriebsleistung der Verbrennungskraftmaschine 11 an den Fahrantrieb 9 konfiguriert. Der dritte Teilantriebsstrang 13c ist hier und vorzugsweise zum wechselseitigen Austausch von Antriebsleistung zwischen der Verbrennungskraftmaschine 11 und der elektrischen Hilfsmaschine 12 konfiguriert.

Die elektrische Hilfsmaschine 12, die hier als Elektromaschine ausgebildet ist, ist Bestandteil eines elektrischen Energiebereitstellungssystems 14 des Hybridsystems, das einen mit der elektrischen Hilfsmaschine 12 hier elektrisch verbundenen elektrischen Energiespeicher 15 aufweist. Die elektrische Hilfsmaschine 12 in dem dargestellten Ausführungsbeispiel kann, wenn überschüssige Leistung von der Verbrennungskraftmaschine 11 zur Verfügung steht, als elektrischer Generator betrieben werden. Insbesondere kann die elektrische Hilfsmaschine 12 den Antriebsstrang 13 jedoch unterstützen, nämlich mit zusätzlichem Drehmoment, wenn aufgrund eines Anstiegs des Leistungsbedarfs des Arbeitsaggregats 7 die Drehzahl an einer Abtriebswelle 16 der Verbrennungskraftmaschine 11 einzubrechen droht. "Unterstützen" bedeutet, dass die Hilfsmaschine 12 zusätzliches Drehmoment erzeugt, so dass sich das von der Verbrennungskraftmaschine 11 erzeugte Drehmoment und das von der Hilfsmaschine 12 erzeugte Drehmoment an der Abtriebswelle 16 addieren.

Mit der Abtriebswelle 16 ist eine mit der Verbrennungskraftmaschine 11 verbundene Welle gemeint, auf die von der Verbrennungskraftmaschine 11 und gegebenenfalls der elektrischen Hilfsmaschine 12 ein Drehmoment übertragen wird und mittels der zumindest das Arbeitsaggregat 7 und der Fahrantrieb 9 angetrieben werden. Die Abtriebswelle 16 kann entweder die Ausgangswelle der Verbrennungskraftmaschine 11 oder eine Getriebeausgangswelle eines der Verbrennungskraftmaschine 11 antriebstechnisch nachgeschalteten Getriebes 17 sein.

Die landwirtschaftliche Arbeitsmaschine 1 weist außerdem ein Fahrerassistenzsystem 18 mit einer Regeleinrichtung bzw. einem sogenannten Vorfahrtregler 19 auf, die bzw. der konfiguriert ist, eine Regelung der Verbrennungskraftmaschine 11, der elektrischen Hilfsmaschine 12 und des Fahrantriebs 9 durchzuführen.

Das in den Figuren dargestellte und insoweit bevorzugte Ausführungsbeispiel betrifft eine landwirtschaftliche Arbeitsmaschine 1, insbesondere einen Mähdrescher, Feldhäcksler oder Traktor, wobei die landwirtschaftliche Arbeitsmaschine 1 eine Antriebsanordnung 10 mit einer Verbrennungskraftmaschine 11 und mit einem eine elektrische Hilfsmaschine 12 aufweisenden elektrischen Energiebereitstellungssystem 14 aufweist und wobei die landwirtschaftliche Arbeitsmaschine 1 mindestens einen Leistungsverbraucher 6,8 aufweist, der von der Antriebsanordnung 10 antreibbar ist.

Mit der "elektrischen Hilfsmaschine" 12 ist eine elektrische Maschine gemeint, die mit der Abtriebswelle 16 der Verbrennungskraftmaschine 11 oder einer Getriebeausgangswelle eines dieser nachgeschalteten Getriebes 17 antriebstechnisch gekoppelt oder koppelbar ist, um nach Art eines Hybridsystems die Verbrennungskraftmaschine 11 elektrisch zu unterstützen. Die Verbrennungskraftmaschine 11 kann durch die elektrische Hilfsmaschine 12 zumindest antreibend, vorzugsweise wahlweise antreibend oder bremsend, unterstützt werden, das heißt, die elektrische Hilfsmaschine 12 kann zumindest als Motor, vorzugsweise wahlweise als Motor oder Generator, betrieben werden. Die im Motorbetrieb benötigte elektrische Energie bzw. die im Generatorbetrieb erzeugte Energie wird, über eine entsprechende elektrische Verbindung 20, mit dem elektrischen Energiespeicher 15 ausgetauscht.

Wesentlich ist nun, dass das elektrische Energiebereitstellungssystem 14 als Modulbaukasten 21 ausgebildet ist.

Mit "Modulbaukasten" ist gemeint, dass das elektrische Energiebereitstellungssystem 14 modular aufgebaut ist, also ein oder mehrere Module M1, M2, M3, M4, M_{Z} aufweist, die jeweils mit mindestens einem anderen der Module M1, M2, M3, M4 und/oder mit der Antriebsanordnung 10 im Übrigen zusammengefügt werden können und/oder über entsprechende Schnittstellen mit mindestens einem anderen der Module M1, M2, M3, M4 und/oder mit der Antriebsanordnung 10 im Übrigen interagieren können. Der Modulbaukasten 21 weist in einer Ausgestaltung zumindest wesentliche Systemkomponenten des elektrischen Energiebereitstellungssystems 14 in Form von mehreren Modulen M1, M2, M3, M4 auf, die an verschiedenen Stellen in der landwirtschaftlichen Arbeitsmaschine 1 platziert sind und gemeinsam notwendig sind, um, miteinander interagierend, eine bestimmte Funktion in der landwirtschaftlichen Arbeitsmaschine 1 auszuführen, hier die elektrischen Energiebereitstellung zur Unterstützung der Verbrennungskraftmaschine 11 ("dezentrale" Module M1, M2, M3, M4). Oder der Modulbaukasten 21 weist in einer anderen Ausgestaltung zumindest wesentliche Systemkomponenten des elektrischen Energiebereitstellungssystems 14 in Form von einem einzelnen Modul M_{Z} auf, das die besagte Funktion in der landwirtschaftlichen Arbeitsmaschine 1 allein ausführt ("zentrales" Modul M_{Z}), wobei das einzelne Modul M_{Z} nicht gezwungenermaßen gekapselt bzw. als das im weiteren noch beschriebene Systemkapselmodul 22 ausgebildet sein muss.

Mit "wesentliche Systemkomponenten" sind die Systemkomponenten des elektrischen Energiebereitstellungssystems 14 gemeint, die für das bestimmungsgemäße Funktionieren der elektrischen Unterstützung der Verbrennungskraftmaschine 11 maßgeblich sind. Die wesentlichen Systemkomponenten sind beispielhaft die elektrische Hilfsmaschine 12 oder der elektrische Energiespeicher 15, wobei vorzugsweise der Modulbaukasten 21 alle Systemkomponenten des elektrischen Energiebereitstellungssystems 14 aufweist.

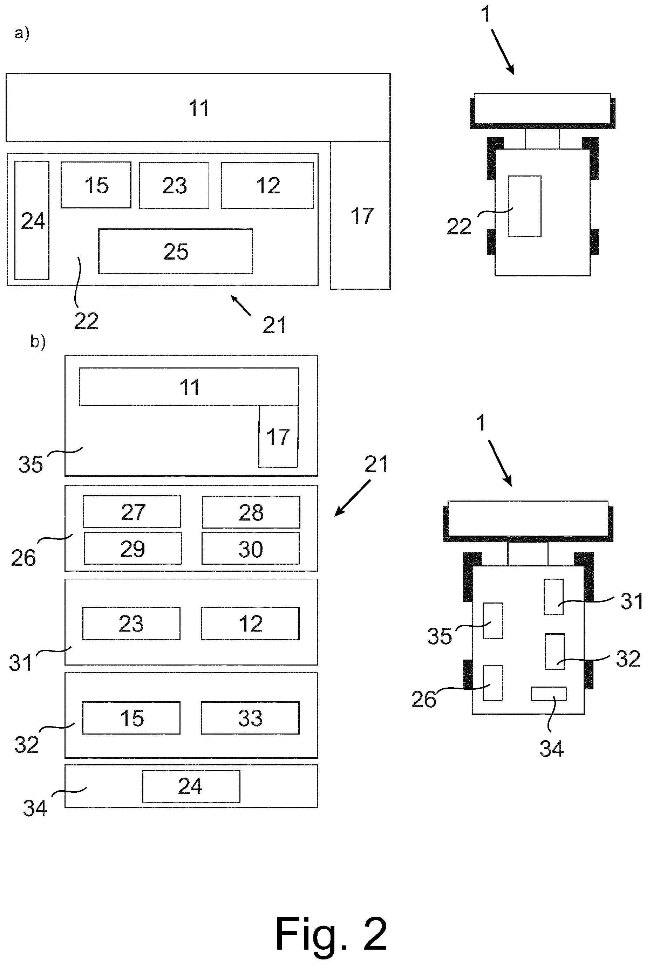

Bei dem in Fig. 2a) dargestellten und insoweit bevorzugten Ausführungsbeispiel ist ferner vorgesehen, dass der Modulbaukasten 21 als zentrales Modul M_{Z} ein austauschbar ausgestaltetes Systemkapselmodul 22 aufweist, wobei das Systemkapselmodul 22 gegen mindestens ein anderes Systemkapselmodul 22 einer anderen Leistungsklasse austauschbar ist, vorzugsweise, dass das Systemkapselmodul 22 ein zumindest größtenteils und insbesondere vollständig geschlossenes Gehäuse G aufweist, in dem zumindest die wesentlichen Systemkomponenten des elektrischen Energiebereitstellungssystems 14 gemeinsam untergebracht sind, weiter vorzugsweise, dass die landwirtschaftliche Arbeitsmaschine 1 eine Aufnahme A mit einer oder mehreren maschinenseitigen Schnittstellen aufweist, in die das Systemkapselmodul 22 der jeweiligen Leistungsklasse, unter Herstellung einer Verbindung zwischen der jeweiligen maschinenseitigen Schnittstelle und einer zugeordneten modulseitigen Schnittstelle, einsetzbar ist.

Mit dem Begriff "Systemkapselmodul" ist ein zentrales Modul M_{Z} gemeint, das zumindest alle wesentlichen, vorzugsweise alle, Systemkomponenten des elektrischen Energiebereitstellungssystems 14 in gekapselter Form zusammenfasst, das heißt in einem gemeinsamen Gehäuse G mit allen erforderlichen mechanischen und/oder elektrischen und/oder fluidtechnischen Schnittstellen (modulseitige Schnittstellen genannt) zur Verbindung mit zugeordneten Schnittstellen an der landwirtschaftlichen Arbeitsmaschine im Übrigen (maschinenseitige Schnittstellen genannt).

Mit "mechanischen Schnittstellen" sind Schnittstellen zur Befestigung des Systemkapselmoduls 22 gemeint.

Mit "elektrischen Schnittstellen" sind Schnittstellen zur Stromversorgung und/oder zu Steuer- und Regelungszwecken gemeint.

Mit "fluidtechnischen Schnittstellen" sind hydraulische und gegebenenfalls pneumatische Schnittstellen beispielsweise für ein Kühlmedium gemeint.

Vorzugsweise beinhaltet das Systemkapselmodul 22 als Systemkomponenten die elektrische Hilfsmaschine 12, den elektrischen Energiespeicher 15, einen Wechselrichter 23, eine Steuer- und Regelungseinheit 24, die vorzugsweise Bestandteil des Vorfahrtreglers 19 ist, und ein Kühlungssystem 25.

Mit "austauschbar ausgestaltet" ist gemeint, dass das Systemkapselmodul 22 mit einfachen Mitteln zerstörungsfrei aus der landwirtschaftlichen Arbeitsmaschine 1 im Übrigen ausbaubar und/oder in die landwirtschaftliche Arbeitsmaschine 1 im Übrigen einbaubar ist, das heißt vorzugsweise, dass das Systemkapselmodul 22 durch bloßes Lösen von kraft- und/oder formschlüssigen mechanischen und/oder elektrischen und/oder fluidtechnischen Verbindungen ausbaubar ist und entsprechend durch Herstellen von kraft- und/oder formschlüssigen mechanischen und/oder von elektrischen und/oder von fluidtechnischen Verbindungen einbaubar ist.

Mit einem "anderen Systemkapselmodul" ist ein Systemkapselmodul 22 mit gleicher Funktion, hier und vorzugsweise der Funktion der elektrischen Energiebereitstellung zur Unterstützung der Verbrennungskraftmaschine 11, und insbesondere mit denselben Systemkomponenten, aber mit einer anderen Leistungsklasse gemeint.

Mit einer "anderen Leistungsklasse" ist gemeint, dass ein Austausch gegen ein Systemkapselmodul 22 möglich ist, das andere die Leistungsfähigkeit der landwirtschaftlichen Arbeitsmaschine 1 im weitesten Sinne beeinflussende Eigenschaften hat, insbesondere Eigenschaften wie die Nennleistung, die Nenndrehzahl, das Nenndrehmoment, die Nennspannung, der Nennstrom, die Speicherkapazität des elektrischen Energiespeichers 15 und/oder die Kühlleistung des Kühlungssystems 25.

Vorteilhaft ist dadurch eine Leistungsskalierung je nach Gesamtsystemanforderung der landwirtschaftlichen Arbeitsmaschine 1 möglich. Als vorteilhaft erweist sich zudem, dass die verschiedenen Systemkapselmodule 22 vorzugsweise einheitliche Schnittstellen aufweisen, was zu einer weiteren Vereinfachung der Ausgestaltung führt. Als weitere Vorteile eines solchen Systemkapselmoduls 22 ergeben sich Kostensenkungen durch Reduktion bzw. Vereinheitlichung von Steckern, Verbindungen, Verkabelung, Dichtungen, etc. und/oder ein schneller Austausch eines Gesamtsystems, beispielsweise entweder im Fehlerfall durch Austausch mit einem neuen System oder falls ein Gesamtsystem auf andere landwirtschaftlichen Arbeitsmaschinen 1 wahlweise übernommen werden soll.

Grundsätzlich kann auch vorgesehen sein, dass das Systemkapselmodul 22 in dem gemeinsamen Gehäuse G eine Vielzahl von austauschbar ausgestalteten Untermodulen aufweist, wobei das jeweilige Untermodul eine oder mehrere der wesentlichen Systemkomponenten beinhaltet. Mit "Untermodule" sind dem Systemkapselmodul 22 untergeordnete Module gemeint, die innerhalb des Systemkapselmoduls 22 gegen Module gleicher Funktion austauschbar sind, sei es im Falle eines Defekts oder im Falle einer gewünschten Leistungsänderung. Im Weiteren werden "dezentrale" Module diskutiert, wobei die hier erwähnten Untermodule ebenfalls als solche dezentralen Module ausgestaltet sein können.

Bei dem in Fig. 2b) dargestellten und insoweit ebenfalls bevorzugten Ausführungsbeispiel ist vorgesehen, dass der Modulbaukasten 21 mehrere dezentrale Module M1, M2, M3, M4 aufweist, die an verschiedenen Stellen in der landwirtschaftlichen Arbeitsmaschine 1 platziert sind und Bestandteil des elektrischen Energiebereitstellungssystems 14 sind, vorzugsweise, dass ein oder mehrere der Module M1, M2, M3, M4, vorzugsweise alle Module M1, M2, M3, M4, austauschbar ausgestaltet sind und jeweils gegen mindestens ein anderes, funktionsgleiches Modul M1, M2, M3, M4 austauschbar sind, weiter vorzugsweise, dass das oder die anderen, funktionsgleichen Module M1, M2, M3, M4 Module einer anderen Leistungsklasse sind.

Mit "dezentralen Modulen" ist gemeint, dass zur produktübergreifenden Standardisierung der Modulbaukasten 21 zumindest die wesentlichen, vorzugsweise alle, Systemkomponenten des elektrischen Energiebereitstellungssystems 14 aufgeteilt in mehrere Module aufweist, die gemeinsam notwendig sind, um die Funktion der elektrischen Energiebereitstellung zur Unterstützung der Verbrennungskraftmaschine 11 in der landwirtschaftlichen Arbeitsmaschine 1 auszuführen, wobei vorzugsweise jedes dieser Module ein solches dezentrales Modul M1, M2, M3, M4 ist. Das dezentrale Modul M1, M2, M3, M4 ist nicht zwingend, aber vorzugsweise gekapselt ausgestaltet, das heißt in einem gemeinsamen Gehäuse G mit allen erforderlichen mechanischen und/oder elektrischen und/oder fluidtechnischen Schnittstellen zur Verbindung mit zugeordneten Schnittstellen an der landwirtschaftlichen Arbeitsmaschine 1 im Übrigen.

Wie bereits oben definiert, sind mit "mechanischen Schnittstellen" Schnittstellen zur Befestigung des jeweiligen Moduls M1, M2, M3, M4, mit "elektrischen Schnittstellen" Schnittstellen zur Stromversorgung und/oder zu Steuer- und Regelungszwecken und mit "fluidtechnischen Schnittstellen" hydraulische und gegebenenfalls pneumatische Schnittstellen beispielsweise für ein Kühlmedium gemeint.

Der Modulbaukasten 21 weist vorzugsweise eines oder mehrere, vorzugsweise alle, der folgenden dezentralen Module M1, M2, M3, M4 auf:
Ein Modul M1 ist hier das Modul "Kühlung" 26 und beinhaltet vorzugsweise einen Wärmetauscher 27, mindestens eine Fluidpumpe 28, insbesondere Wasserpumpe, gegebenenfalls mindestens einen Temperatursensor 29, und einen Klimakompressor 30.

Ein Modul M2 ist hier das Modul "elektrischer Antrieb" 31 und beinhaltet vorzugsweise einen Wechselrichter 23 und die elektrische Hilfsmaschine 12.

Ein Modul M3 ist hier das Modul "Energiespeicher" 32 und beinhaltet vorzugsweise den elektrischen Energiespeicher 15 und eine Stromverteilung 33 umfassend die elektrische Verbindung 20.

Ein Modul M4 ist hier das Modul "Regelung" 34 und beinhaltet vorzugweise eine Steuer- und Regelungseinheit 24, die vorzugsweise Bestandteil des Vorfahrtreglers 19 ist.

Gleichermaßen, wie bereits oben definiert wurde, ist mit "austauschbar ausgestaltet" gemeint, dass die Module M1, M2, M3, M4 mit einfachen Mitteln zerstörungsfrei aus der landwirtschaftlichen Arbeitsmaschine 1 im Übrigen ausbaubar und/oder in die landwirtschaftliche Arbeitsmaschine 1 im Übrigen einbaubar sind.

Mit einem "anderen Modul" ist ein Modul M1, M2, M3, M4 mit gleicher Funktion, gemeint, wobei als gleiche Funktion beispielweise die Funktion Kühlung, Energiespeicherung, etc. gemeint ist.

Mit einer "anderen Leistungsklasse" ist gemeint, dass ein Austausch gegen ein Modul M1, M2, M3, M4 möglich ist, das andere die Leistungsfähigkeit der landwirtschaftlichen Arbeitsmaschine 1 im weitesten Sinne beeinflussende Eigenschaften hat, wobei als solche die Leistungsfähigkeit im weitesten Sinne beeinflussende Eigenschaften beispielsweise das Modul "Kühlung" 26 die Eigenschaften Kühlleistung des Kühlungssystem 25 und/oder die Ausgestaltung der Sensorik hat.

Vorteilhafterweise ist dadurch eine Leistungsskalierung je nach Gesamtsystemanforderung der landwirtschaftlichen Arbeitsmaschine 1 möglich. Als vorteilhaft erweist sich zudem, dass die verschiedenen dezentralen Module M1, M2, M3, M4 vorzugsweise einheitliche Schnittstellen aufweisen, was zu einer weiteren Vereinfachung der Ausgestaltung führt.

Darüber hinaus ist, wie ebenfalls Fig. 2b) schematisch zeigt, hier und vorzugsweise vorgesehen, dass die Verbrennungskraftmaschine 11, vorzugsweise zusammen mit einem damit antriebstechnisch gekoppelten Getriebe 17, Bestandteil eines weiteren Moduls M_{P} der landwirtschaftlichen Arbeitsmaschine 1 ist oder als weiteres Modul M_{P} der landwirtschaftlichen Arbeitsmaschine 1 ausgestaltet ist, vorzugsweise, dass das weitere Modul M_{P} austauschbar ausgestaltet ist und gegen mindestens ein anderes, funktionsgleiches Modul M_{P} austauschbar ist, weiter vorzugsweise, dass das oder die anderen, funktionsgleichen Module M_{P} Module einer anderen Leistungsklasse sind.

Das "weitere" Modul M_{P} ist hier also ein den Primärantrieb bildendes oder aufweisendes Modul.

Das antriebstechnisch mit der Verbrennungskraftmaschine 11 gekoppelte und dieser nachgeschaltete Getriebe 17 ist vorzugsweise derart ausgestaltet, dass es eine Getriebeausgangswelle aufweist, auf das die elektrische Hilfsmaschine 12 zumindest antreibend (im Motorbetrieb), vorzugsweise wahlweise antreibend (im Motorbetrieb) oder bremsend (im Generatorbetrieb), einwirken kann.

Gleichermaßen, wie bereits oben definiert wurde, ist mit "austauschbar ausgestaltet" gemeint, dass das Modul M_{P} mit einfachen Mitteln zerstörungsfrei aus der landwirtschaftlichen Arbeitsmaschine 1 im Übrigen ausbaubar und/oder in die landwirtschaftlichen Arbeitsmaschine 1 im Übrigen einbaubar ist.

Mit einem "anderen Modul" ist ein Modul M_{P} mit gleicher Funktion, hier und vorzugsweise der Funktion des Primärantriebs, gemeint.

Mit einer "anderen Leistungsklasse" ist gemeint, dass ein Austausch gegen ein Modul M_{P} möglich ist, das andere die Leistungsfähigkeit der landwirtschaftlichen Arbeitsmaschine 1 im weitesten Sinne beeinflussende Eigenschaften hat, insbesondere die Nennleistung der Verbrennungskraftmaschine 11, die Nenndrehzahl der Verbrennungskraftmaschine 11 und/oder das Nenndrehmoment der Verbrennungskraftmaschine 11.

Vorteilhafterweise ist auch dadurch eine Leistungsskalierung je nach Gesamtsystemanforderung der landwirtschaftlichen Arbeitsmaschine 1 möglich. Als vorteilhaft erweist sich zudem, dass die verschiedenen Module M_{P} vorzugsweise einheitliche Schnittstellen aufweisen, was zu einer weiteren Vereinfachung der Ausgestaltung führt.

Weiterhin ist hier und vorzugsweise vorgesehen, dass ein oder mehrere der Module M1, M2, M3, M4, M_{P}, M_{z}, vorzugsweise alle Module M1, M2, M3, M4, M_{P}, M_{Z}, ein zumindest größtenteils und insbesondere vollständig geschlossenes Gehäuse G aufweisen, in dem zumindest ein oder mehrere der wesentlichen Systemkomponenten des elektrischen Energiebereitstellungssystems 14 gemeinsam untergebracht sind, weiter vorzugsweise, dass die landwirtschaftliche Arbeitsmaschine 1 für jedes austauschbare Modul M1, M2, M3, M4, M_{P}, M_{z} jeweils eine Aufnahme A mit einer oder mehreren maschinenseitigen Schnittstellen aufweist, in die das jeweilige Modul M1, M2, M3, M4, Mp, M_{z}, unter Herstellung einer Verbindung zwischen der jeweiligen maschinenseitigen Schnittstelle und einer zugeordneten modulseitigen Schnittstelle, einsetzbar ist.

### Bezugszeichenliste

- 1: Landwirtschaftliche Arbeitsmaschine
- 2: Fahrer
- 3: Feldbestand
- 4: Gutfluss
- 5: Einzugskanal
- 6: Leistungsverbraucher
- 7: Arbeitsaggregat
- 8: Leistungsverbraucher
- 9: Fahrantrieb
- 10: Antriebsanordnung
- 11: Verbrennungskraftmaschine
- 12: Elektrische Hilfsmaschine
- 13: Antriebsstrang
- 13a: Erster Teilantriebsstrang
- 13b: Zweiter Teilantriebsstrang
- 13c: Dritter Teilantriebsstrang
- 14: Elektrisches Energiebereitstellungssystem
- 15: Elektrischer Energiespeicher
- 16: Abtriebswelle
- 17: Antriebstechnisch nachgeschaltetes Getriebe
- 18: Fahrerassistenzsystem
- 19: Vorfahrtregler
- 20: Elektrische Verbindung
- 21: Modulbaukasten
- 22: Systemkapselmodul
- 23: Wechselrichter
- 24: Steuer- und Regelungseinheit
- 25: Kühlungssystem
- 26: Modul "Kühlung"
- 27: Wärmeaustauscher
- 28: Wasserpumpe
- 29: Temperatursensor
- 30: Klimakompressor
- 31: Modul "elektrischer Antrieb
- 32: Modul "Energiespeicher"
- 33: Stromverteilung
- 34: Modul "Regelung"
- M_{P}: Modul "Primärantrieb"
- M_{Z}: zentrales Modul des Modulbaukastens
- M1-M4: dezentrale Module des Modulbaukastens
- A: Aufnahme
- G: Gehäuse

## Patentansprüche

1. Landwirtschaftliche Arbeitsmaschine, insbesondere Mähdrescher, Feldhäcksler oder Traktor, wobei die landwirtschaftliche Arbeitsmaschine (1) eine Antriebsanordnung (10) mit einer Verbrennungskraftmaschine (11) und mit einem eine elektrische Hilfsmaschine (12) aufweisenden elektrischen Energiebereitstellungssystem (14) aufweist und wobei die landwirtschaftliche Arbeitsmaschine (1) mindestens einen Leistungsverbraucher (6, 8) aufweist, der von der Antriebsanordnung (10) antreibbar ist,
**dadurch gekennzeichnet,**
**dass** das elektrische Energiebereitstellungssystem (14) als Modulbaukasten (21) ausgebildet ist.

2. Landwirtschaftliche Arbeitsmaschine nach Anspruch 1, **dadurch gekennzeichnet, dass** der Modulbaukasten (21) als zentrales Modul (Mz) ein austauschbar ausgestaltetes Systemkapselmodul (22) aufweist, wobei das Systemkapselmodul (22) gegen mindestens ein anderes Systemkapselmodul (22) einer anderen Leistungsklasse austauschbar ist,
vorzugsweise, dass das Systemkapselmodul (22) ein zumindest größtenteils und insbesondere vollständig geschlossenes Gehäuse (G) aufweist, in dem zumindest die wesentlichen Systemkomponenten des elektrischen Energiebereitstellungssystems (14) gemeinsam untergebracht sind,
weiter vorzugsweise, dass die landwirtschaftliche Arbeitsmaschine (1) eine Aufnahme (A) mit einer oder mehreren maschinenseitigen Schnittstellen aufweist, in die das Systemkapselmodul (22) der jeweiligen Leistungsklasse, unter Herstellung einer Verbindung zwischen der jeweiligen maschinenseitigen Schnittstelle und einer zugeordneten modulseitigen Schnittstelle, einsetzbar ist.

3. Landwirtschaftliche Arbeitsmaschine nach Anspruch 1 oder 2, **dadurch gekennzeichnet, dass** der Modulbaukasten (21) mehrere dezentrale Module (M1, M2, M3, M4) aufweist, die an verschiedenen Stellen in der landwirtschaftlichen Arbeitsmaschine (1) platziert sind und Bestandteil des elektrischen Energiebereitstellungssystems (14) sind,
vorzugsweise, dass ein oder mehrere der Module (M1, M2, M3, M4), vorzugsweise alle Module (M1, M2, M3, M4), austauschbar ausgestaltet sind und jeweils gegen mindestens ein anderes, funktionsgleiches Modul (M1, M2, M3, M4) austauschbar sind, weiter vorzugsweise, dass das oder die anderen, funktionsgleichen Module (M1, M2, M3, M4) Module einer anderen Leistungsklasse sind.

4. Landwirtschaftliche Arbeitsmaschine nach einem der vorhergehenden Ansprüche, **dadurch gekennzeichnet, dass** die Verbrennungskraftmaschine (11), vorzugsweise zusammen mit einem damit antriebstechnisch gekoppelten Getriebe (17), Bestandteil eines weiteren Moduls (M_{P}) der landwirtschaftlichen Arbeitsmaschine (1) ist oder als weiteres Modul (M_{P}) der landwirtschaftlichen Arbeitsmaschine (1) ausgestaltet ist, vorzugsweise, dass das weitere Modul (M_{P}) austauschbar ausgestaltet ist und gegen mindestens ein anderes, funktionsgleiches Modul (M_{P}) austauschbar ist, weiter vorzugsweise, dass das oder die anderen, funktionsgleichen Module (M_{P}) Module einer anderen Leistungsklasse sind.

5. Landwirtschaftliche Arbeitsmaschine nach einem der vorhergehenden Ansprüche, **dadurch gekennzeichnet, dass** ein oder mehrere der Module (M1, M2, M3, M4, M_{P}, M_{Z}), vorzugsweise alle Module (M1, M2, M3, M4, M_{P}, M_{Z}), ein zumindest größtenteils und insbesondere vollständig geschlossenes Gehäuse (G) aufweisen, in dem zumindest ein oder mehrere der wesentlichen Systemkomponenten des elektrischen Energiebereitstellungssystems (14) gemeinsam untergebracht sind,
weiter vorzugsweise, dass die landwirtschaftliche Arbeitsmaschine (1) für jedes austauschbare Modul (M1, M2, M3, M4, M_{P}, M_{z}) jeweils eine Aufnahme (A) mit einer oder mehreren maschinenseitigen Schnittstellen aufweist, in die das jeweilige Modul (M1, M2, M3, M4, M_{P}, M_{Z}), unter Herstellung einer Verbindung zwischen der jeweiligen maschinenseitigen Schnittstelle und einer zugeordneten modulseitigen Schnittstelle, einsetzbar ist.
